(19) **Europäisches Patentamt / European Patent Office / Office européen des brevets**

(11) **EP 4 775 927 A1**

(12) **EUROPEAN PATENT APPLICATION**
published in accordance with Art. 153(4) EPC

(43) Date of publication:
**15.07.2026  Bulletin 2026/29**

(21) Application number: **23951322.9**

(22) Date of filing: **14.11.2023**

(51) International Patent Classification (IPC):
*G01B 21/32* (2006.01)       *G01B 21/02* (2006.01)
*G01B 21/22* (2006.01)

(52) Cooperative Patent Classification (CPC):
**G01B 21/02; G01B 21/22; G01B 21/32**

(86) International application number:
**PCT/CN2023/131409**

(87) International publication number:
**WO 2025/050509 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.09.2023  CN 202311152677**

(71) Applicant: **CRRC Changchun Railway Vehicles Co., Ltd.**
**Changchun, Jilin 130000 (CN)**

(72) Inventors:
- LI, Benhuai
  **Changchun, Jilin 130000 (CN)**
- LIU, Yanwen
  **Changchun, Jilin 130000 (CN)**
- WANG, Lu
  **Changchun, Jilin 130000 (CN)**
- ZHANG, Yiming
  **Changchun, Jilin 130000 (CN)**

(74) Representative: **Vogelbruch, Keang**
**VOGELBRUCH Patentanwaltsgesellschaft mbH**
**Paul-Gerhardt-Straße 16**
**40593 Düsseldorf (DE)**

(54) **TEST DUMMY CHEST DISPLACEMENT MEASUREMENT METHOD AND APPARATUS, ELECTRONIC DEVICE AND MEDIUM**

(57)    A test dummy chest displacement measurement method, applied to a test dummy chest displacement measurement device. The method comprises: using the point of a universal joint connected to a chest rib of a test dummy as a measurement point, and acquiring design parameters of a measurement device in a pre-established coordinate system, and initial angles of a first angle sensor (1), a second angle sensor (2) and a third angle sensor (3) in the measurement device (S101); using the point of the center of a rotating shaft of the universal joint connected to the chest rib of the test dummy as a measurement point and, on the basis of the design parameters and the initial angles of the first angle sensor (1), the second angle sensor (2) and the third angle sensor (3), determining the initial coordinates of the measurement point when the chest of the test dummy does not take the impact (S102); after the chest of the test dummy has taken the impact, acquiring the current angles of the first angle sensor (1), the second angle sensor (2) and the third angle sensor (3) in the measurement device (S103); on the basis of the current angles of the first angle sensor (1), the second angle sensor (2) and the third angle sensor (3), determining the current coordinates of the measurement point when the chest of the test dummy takes the impact (S104); and, on the basis of the initial coordinates of the measurement point and the current coordinates of the measurement point, obtaining the three-dimensional compression displacement of the chest of the test dummy (S105). The measurement method can improve the accuracy of measuring the chest deformation of dummies. In addition, further provided are a test dummy chest displacement measurement apparatus, an electronic device and a computer-readable storage medium.

EP 4 775 927 A1

Acquiring design parameters of the measuring device in a pre-established coordinate system, and initial angles of the first angle sensor, the second angle sensor, and the third angle sensor in the measuring device — S101

Setting, as a measurement point, a point at which a rotation axis center of the universal joint is connected to the rib of the chest of the test dummy, and determining, based on the design parameters and the initial angles of the first angle sensor, the second angle sensor, and the third angle sensor, initial coordinates of the measurement point when no impact is exerted on the chest of the test dummy — S102

Acquiring current angles of the first angle sensor, the second angle sensor, and the third angle sensor in the measuring device after an impact is exerted on the chest of the test dummy — S103

Determining, based on the current angles of the first angle sensor, the second angle sensor, and the third angle sensor, current coordinates of the measurement point when an impact is exerted on the chest of the test dummy — S104

Obtaining a three-dimensional displacement of compressed chest of the test dummy based on initial coordinates of the measurement point and current coordinates of the measurement point — S105

FIG. 1

**Description**

**CROSS REFERENCE TO THE RELATED APPLICATIONS**

The present invention claims priority to Chinese Patent Application No. 2023111526772, filed with the Chinese Patent Office on September 7, 2023, entitled "TEST DUMMY CHEST DISPLACEMENT MEASUREMENT METHOD AND APPARATUS, ELECTRONIC DEVICE AND MEDIUM", the entirety of which is incorporated herein by reference.

**TECHNICAL FIELD**

The present invention relates to the field of crash testing and in particular to a method and apparatus for measuring a displacement of the chest of a test dummy, an electronic device, and a medium.

**BACKGROUND ART**

Crash test dummies are important tools for assessing the passive safety performance of vehicles (e.g., automobiles, trains, aircrafts, etc.). The occupant protection performance of vehicles is primarily evaluated through simulated crash tests in conjunction with biomechanical injury criteria, so as to continuously promote the improvement of vehicle safety. Here, the chest of a human body is one of the parts highly susceptible to injury. Therefore, it is necessary to test the deformation state of the chests of dummies upon impact during improvement of vehicle safety.

Currently, prior measurement of displacements of the chests of crash test dummies is mostly performed by using unidirectional displacement sensors, for example, of pendulum type, telescopic rod type, cable-extension type, and the like. The measurement method is simple and can reflect a displacement of the chest of a dummy in a certain direction after collision, so as to investigate thoracic injury in a real person. However, this measurement method can only reflect a displacement of the ribs in a certain direction when an impact is exerted on the chest of a dummy, resulting in a mismatch between the measured displacement and the real scenario, leading to inaccurate displacement measurement results, thereby affecting the judgment of thoracic injury in a real person. Therefore, how to accurately measure a spatial displacement of the chest of a dummy generated upon impact has become an urgent problem to be solved.

**SUMMARY**

In view of this, an object of the present invention is to provide a method and apparatus for measuring a displacement of the chest of a test dummy, an electronic device, and a medium, which can determine compressive displacement components of the chest of the dummy in three directions by using a simply structured measuring device consisting of three angle sensors, so as to measure changes in the compressive displacements of the ribs in the chest of the dummy, thereby more realistically reflecting a biological response when an impact is exerted on the chest, and improving the accuracy in measurement of the deformation of the chest of the dummy.

The present invention mainly includes the following several aspects.

In a first aspect, an embodiment of the present invention provides a method for measuring a displacement of the chest of a test dummy, which is applied to a device for measuring a displacement of the chest of a test dummy. The measuring device consists of a first angle sensor, a second angle sensor, a third angle sensor, a universal joint, a first swing arm, and a second swing arm. The third angle sensor, the second angle sensor, the second swing arm, the first angle sensor, the first swing arm, and the universal joint are connected in sequence. A front end of the universal joint is connected to a rib of the chest of the test dummy. The measuring method comprises:

acquiring design parameters of the measuring device in a pre-established coordinate system, and initial angles of the first angle sensor, the second angle sensor, and the third angle sensor in the measuring device;

setting, as a measurement point, a point at which a rotation axis center of the universal joint is connected to the rib of the chest of the test dummy, and determining, based on the design parameters and the initial angles of the first angle sensor, the second angle sensor, and the third angle sensor, initial coordinates of the measurement point when no impact is exerted on the chest of the test dummy;

acquiring current angles of the first angle sensor, the second angle sensor, and the third angle sensor in the measuring device after an impact is exerted on the chest of the test dummy;

determining, based on the current angles of the first angle sensor, the second angle sensor, and the third angle sensor, current coordinates of the measurement point when an impact is exerted on the chest of the test dummy; and

obtaining a three-dimensional displacement of the compressed chest of the test dummy based on the initial coordinates of the measurement point and the current coordinates of the measurement point.

Further, the design parameters include a first distance, a second distance, a third distance, and a target distance. The first distance is a vertical distance from an axial center of the first angle sensor to the rotation axis center of the universal joint. The second distance is a vertical distance from the axial center of the first angle sensor to an axial center of the second angle sensor. The third distance is a vertical distance from the axial center of the second angle sensor to an axial center of the third angle sensor. The target distance is a vertical distance from the axial center of the second angle sensor to an X-axis of the coordinate system. The step of determining, based on the design parameters and the initial angles of the first angle sensor, the second angle sensor, and the third angle sensor, the initial coordinates of the measurement point when no impact is exerted on the chest of the test dummy comprises:

substituting the first distance, the second distance, and the initial angles of the first angle sensor, the second angle sensor, and the third angle sensor into a first preset formula to obtain an initial horizontal-axis coordinate;

substituting the first distance, the second distance, the target distance, the initial angle of the first angle sensor, and the initial angle of the third angle sensor into a second preset formula to obtain an initial longitudinal-axis coordinate, wherein the first angle sensor measures an angle between the first swing arm and the second swing arm, the second angle sensor measures an angle between a rotation axis of the second angle sensor and a Z-axis, and the third angle sensor measures an angle between the second swing arm and the X-axis;

substituting the first distance, the second distance, the third distance, and the initial angles of the first angle sensor, the second angle sensor, and the third angle sensor into a third preset formula to obtain an initial vertical-axis coordinate; and

determining a combination of the initial horizontal-axis coordinate, the initial longitudinal-axis coordinate, and the initial vertical-axis coordinate as the initial coordinates of the measurement point when no impact is exerted on the chest of the test dummy.

Further, the step of determining, based on the current angles of the first angle sensor, the second angle sensor, and the third angle sensor, current coordinates of the measurement point when an impact is exerted on the chest of the test dummy comprises:

substituting the first distance, the second distance, and the current angles of the first angle sensor, the second angle sensor, and the third angle sensor into a fourth preset formula to obtain a current horizontal-axis coordinate;

substituting the first distance, the second distance, the target distance, the current angle of the first angle sensor, and the current angle of the third angle sensor into a fifth preset formula to obtain a current longitudinal-axis coordinate;

substituting the first distance, the second distance, the third distance, and the current angles of the first angle sensor, the second angle sensor, and the third angle sensor into a sixth preset formula to obtain a current vertical-axis coordinate; and

determining a combination of the current horizontal-axis coordinate, the current longitudinal-axis coordinate, and the current vertical-axis coordinate as the current coordinates of the measurement point when an impact is exerted on the chest of the test dummy.

Further, the first preset formula is a formula in which a measurement time parameter in the fourth preset formula is zero. The second preset formula is a formula in which a measurement time parameter in the fifth preset formula is zero. The third preset formula is a formula in which a measurement time parameter in the sixth preset formula is zero.

Further, the step of obtaining a three-dimensional displacement of the compressed chest of the test dummy based on the initial coordinates of the measurement point and the current coordinates of the measurement point comprises:

determining a difference between a current horizontal-axis coordinate in the current coordinates of the measurement point and an initial horizontal-axis coordinate in the initial coordinates of the measurement point as a current horizontal displacement;

determining a difference between a current longitudinal-axis coordinate in the current coordinates of the measurement point and an initial longitudinal-axis coordinate in the initial coordinates of the measurement point as a current longitudinal displacement;

determining a difference between a current vertical-axis coordinate in the current coordinates of the measurement point and an initial vertical-axis coordinate in the initial coordinates of the measurement point as a current vertical displacement; and

determining a combination of the current horizontal displacement, the current longitudinal displacement, and the current vertical displacement as the three-dimensional displacement of the compressed chest of the test dummy.

Further, the measuring method further comprises:

obtaining a three-dimensional displacement of a compressed upper-left rib of the chest of the test dummy by a measuring device with a universal joint connected to the upper-left rib of the test dummy;

obtaining a three-dimensional displacement of a compressed lower-left rib of the chest of the test dummy by a measuring device with a universal joint connected to the lower-left rib of the test dummy;

obtaining a three-dimensional displacement of a compressed upper-right rib of the chest of the test dummy by a measuring device with a universal joint connected to the upper-right rib of the test dummy;

obtaining a three-dimensional displacement of a compressed lower-right rib of the chest of the test dummy by a measuring device with a universal joint connected to the lower-right rib of the test dummy;

determining an average displacement of the compressed chest of the test dummy from the three-dimensional displacement of the compressed upper-left rib, the three-dimensional displacement of the compressed lower-left rib, the three-dimensional displacement of the compressed upper-right rib, and the three-dimensional displacement of the compressed lower-right rib of the chest of the test dummy;

determining whether the average displacement of the compressed chest of the test dummy is within a preset calibrated chest displacement range; and

if yes, determining that the biomimetic performance of the chest of the test dummy meets the standard.

In a second aspect, an embodiment of the present invention further provides an apparatus for measuring a displacement of the chest of a test dummy, which is applied to a device for measuring a displacement of the chest of a test dummy. The measuring device consists of a first angle sensor, a second angle sensor, a third angle sensor, a universal joint, a first swing arm, and a second swing arm. The third angle sensor, the second angle sensor, the second swing arm, the first angle sensor, the first swing arm, and the universal joint are connected in sequence. A front end of the universal joint is connected to a rib of the chest of the test dummy. The measuring apparatus comprises:

a first acquisition module configured to acquire design parameters of the measuring device in a pre-established coordinate system, and initial angles of the first angle sensor, the second angle sensor, and the third angle sensor in the measuring device;

a first determination module configured to set, as a measurement point, a point at which a rotation axis center of the universal joint is connected to the rib of the chest of the test dummy, and determine, based on the design parameters and the initial angles of the first angle sensor, the second angle sensor, and the third angle sensor, initial coordinates of the measurement point when no impact is exerted on the chest of the test dummy;

a second acquisition module configured to acquire current angles of the first angle sensor, the second angle sensor, and the third angle sensor in the measuring device after an impact is exerted on the chest of the test dummy;

a second determination module configured to determine, based on the current angles of the first angle sensor, the second angle sensor, and the third angle sensor, current coordinates of the measurement point when an impact is exerted on the chest of the test dummy; and

a measurement module configured to obtain a three-dimensional displacement of the compressed chest of the test dummy based on the initial coordinates of the measurement point and the current coordinates of the measurement point.

Further, the design parameters include a first distance, a second distance, a third distance, and a target distance. The first distance is a vertical distance from an axial center of the first angle sensor to the rotation axis center of the universal joint. The second distance is a vertical distance from the axial center of the first angle sensor to an axial center of the second angle sensor. The third distance is a vertical distance from the axial center of the second angle sensor to an axial center of the third angle sensor. The target distance is a vertical distance from the axial center of the second angle sensor to the X-axis of the coordinate system. When the first determination module is configured to determine, based on the design parameters and the initial angles of the first angle sensor, the second angle sensor, and the third angle sensor, initial coordinates of the measurement point when no impact is exerted on the chest of the test dummy, the first determination module is specifically configured to:

substitute the first distance, the second distance, and the initial angles of the first angle sensor, the second angle sensor, and the third angle sensor into a first preset formula to obtain an initial horizontal-axis coordinate;

substitute the first distance, the second distance, the target distance, the initial angle of the first angle sensor, and the initial angle of the third angle sensor into a second preset formula to obtain an initial longitudinal-axis coordinate, wherein the first angle sensor measures an angle between the first swing arm and the second swing arm, the second angle sensor measures an angle between a rotation axis of the second angle sensor and a Z-axis, and the third angle sensor measures an angle between the second swing arm and the X-axis;

substitute the first distance, the second distance, the third distance, and the initial angles of the first angle sensor, the second angle sensor, and the third angle sensor into a third preset formula to obtain an initial vertical-axis coordinate; and

determine a combination of the initial horizontal-axis coordinate, the initial longitudinal-axis coordinate, and the initial vertical-axis coordinate as the initial coordinates of the measurement point when no impact is exerted on the chest of the test dummy.

In a third aspect, an embodiment of the present invention further provides an electronic device comprising: a processor, a memory, and a bus. The memory stores machine-readable instructions executable by the processor. When the electronic device is running, the processor communicates with the memory via the bus. The machine-readable instructions are executed by the processor to execute the steps of the method for measuring a displacement of the chest of a test dummy as described above.

In a fourth aspect, an embodiment of the present invention further provides a computer-readable storage medium. A computer program is stored on the computer-readable storage medium. The computer program is run by a processor to execute the steps of the method for measuring a displacement of the chest of a test dummy as described above.

The embodiments of the present invention provide a method and apparatus for measuring a displacement of the chest of a test dummy, an electronic device, and a medium, which are applied to a device for measuring a displacement of the chest of a test dummy. The measuring device consists of a first angle sensor, a second angle sensor, a third angle sensor, a universal joint, a first swing arm, and a second swing arm. The third angle sensor, the second angle sensor, the second swing arm, the first angle sensor, the first swing arm, and the universal joint are connected in sequence. The front end of the universal joint is connected to a rib of the chest of the test dummy. The measuring method comprises: acquiring design parameters of the measuring device in a pre-established coordinate system, and initial angles of the first angle sensor, the second angle sensor, and the third angle sensor in the measuring device; setting, as a measurement point, a point at which a rotation axis center of the universal joint is connected to the rib of the chest of the test dummy, and determining, based on the design parameters and the initial angles of the first angle sensor, the second angle sensor, and the third angle sensor, initial coordinates of the measurement point when no impact is exerted on the chest of the test dummy; acquiring current angles of the first angle sensor, the second angle sensor, and the third angle sensor in the measuring device after an impact is exerted on the chest of the test dummy; determining, based on the current angles of the first angle sensor, the second angle sensor, and the third angle sensor, current coordinates of the measurement point when an impact is exerted on the chest of the test dummy; and obtaining a three-dimensional displacement of the compressed chest of the test dummy based on the initial coordinates of the measurement point and the current coordinates of the measurement point.

In this way, according to the technical solution provided herein, compressive displacement components of the chest of a dummy in three directions can be determined by a simply structured measuring device consisting of three angle sensors, so as to measure changes in the compressive displacements of the ribs in the chest of the dummy, thereby more realistically reflecting a biological response when an impact is exerted on the chest, and improving the accuracy in measurement of the deformation of the chest of the dummy.

In order to provide clearer and easier understanding of the above objectives, features, and advantages of the present invention, preferred embodiments will be described below in detail by way of example with reference to the accompanying drawings.

**BRIEF DESCRIPTION OF DRAWINGS**

In order to more clearly illustrate the technical solutions of embodiments of the present invention, drawings required to be used in the embodiments will be described briefly below. It is understood that the drawings below are merely illustrative of some embodiments of the present invention and thus should not be considered as limiting its scope. It will be appreciated by those of ordinary skill in the art that other relevant drawings can be obtained according to these drawings without any inventive effort.

FIG. 1 shows a flowchart of a method for measuring a displacement of the chest of a test dummy according to an embodiment of the present invention;

FIG. 2 shows a flowchart of another method for measuring a displacement of the chest of a test dummy according to an embodiment of the present invention;

FIG. 3 shows a schematic structural diagram of a measuring device according to an embodiment of the present invention;

FIG. 4 shows a first schematic diagram of a coordinate system according to an embodiment of the present invention;

FIG. 5 shows a second schematic diagram of a coordinate system according to an embodiment of the present invention;

FIG. 6 shows a first schematic diagram of a spatial geometry principle according to an embodiment of the present invention;

FIG. 7 shows a second schematic diagram of a spatial geometry principle according to an embodiment of the present invention;

FIG. 8 shows a first structural diagram of an apparatus for measuring a displacement of the chest of a test dummy according to an embodiment of the present invention;

FIG. 9 shows a second structural diagram of an apparatus for measuring a displacement of the chest of a test dummy according to an embodiment of the present invention; and

FIG. 10 shows a schematic structural diagram of an electronic device according to an embodiment of the present invention.

**DETAILED DESCRIPTION OF EMBODIMENTS**

In order to further clarify the objects, technical solutions, and advantages of the embodiments of the present invention, the technical solutions of the embodiments of the present invention will be clearly and completely described below with reference to the drawings in the embodiments of the present invention. It should be understood that the drawings in the present invention are only for the purpose of illustration and description, and are not intended to limit the scope of protection of the present invention. In addition, it should be understood that the schematic drawings are not drawn to actual scale. The flowcharts used in the present invention show operations implemented according to some embodiments of the present invention. It should be understood that the operations of the flowcharts may not be implemented in sequence, and steps without a logical contextual relationship may be carried out in reverse order or simultaneously. Furthermore, under the guidance of the content of the present invention, those skilled in the art may add one or more other operations to the flowcharts, or remove one or more operations from the flowcharts.

In addition, the embodiments to be described are some, but not all of the embodiments of the present invention.

Generally, the components of the embodiments of the present invention, as described and illustrated in the figures herein, may be arranged and designed in a wide variety of different configurations. Thus, the following detailed description of the embodiments of the present invention, as represented in the figures, is not intended to limit the scope of the present invention as claimed, but is merely representative of selected embodiments of the present invention. All the other embodiments obtained by those skilled in the art in light of the embodiments of the present invention without inventive efforts will fall within the scope of the present invention as claimed.

In order to enable those skilled in the art to use the content of the present invention, the following implementations are given in connection with the specific application scenario "measurement of a displacement of the chest of a test dummy". It will be appreciated by those skilled in the art that the general principles defined herein may be applied to other embodiments and application scenarios without departing from the spirit and scope of the present invention.

The methods, apparatuses, electronic devices, or computer-readable storage media described below in the embodiments of the present invention are applicable to any scenario where it is necessary to measure a displacement of the chest of a test dummy. The embodiments of the present invention do not limit the specific application scenarios. Any solution using a method and apparatus for measuring a displacement of the chest of a test dummy, an electronic device, and a storage medium according to the embodiments of the present invention would fall within the scope of protection of the present invention.

It is worth noting that crash test dummies are important tools for assessing the passive safety performance of vehicles (e.g., automobiles, trains, aircrafts, etc.). The occupant protection performance of vehicles is primarily evaluated through simulated crash tests in conjunction with biomechanical injury criteria, so as to continuously facilitate the improvement of vehicle safety. Here, the chest of a human body is one of the parts highly susceptible to injury. Therefore, it is necessary to test the deformation state of the chests of dummies upon impact during improvement of vehicle safety.

Currently, prior measurement of displacements of the chests of crash test dummies is mostly performed by using unidirectional displacement sensors, for example, of pendulum type, telescopic rod type, cable-extension type, and the like. The measurement method is simple and can reflect a displacement of the chest of a dummy in a certain direction after collision, so as to investigate thoracic injury in a real person. However, this measurement method can only reflect a displacement of the ribs in a certain direction when an impact is exerted on the chest of a dummy, resulting in a mismatch between the measured displacement and the real scenario, leading to inaccurate displacement measurement results, thereby affecting the judgment of thoracic injury in a real person. Therefore, how to accurately measure a spatial displacement of the chest of a dummy generated upon impact has become an urgent problem to be solved.

On this basis, the present invention proposes a method and apparatus for measuring a displacement of the chest of a test dummy, an electronic device, and a medium, which are applied to a device for measuring a displacement of the chest of a test dummy. The measuring device consists of a first angle sensor, a second angle sensor, a third angle sensor, a universal joint, a first swing arm, and a second swing arm. The third angle sensor, the second angle sensor, the second swing arm, the first angle sensor, the first swing arm, and the universal joint are connected in sequence. The front end of the universal joint is connected to a rib of the chest of the test dummy. The measuring method comprises: acquiring design parameters of the measuring device in a pre-established coordinate system, and initial angles of the first angle sensor, the second angle sensor, and the third angle sensor in the measuring device; setting, as a measurement point, a point at which a rotation axis center of the universal joint is connected to the rib of the chest of the test dummy, and determining, based on the design parameters and the initial angles of the first angle sensor, the second angle sensor, and the third angle sensor, initial coordinates of the measurement point when no impact is exerted on the chest of the test dummy; acquiring current angles of the first angle sensor, the second angle sensor, and the third angle sensor in the measuring device after an impact is exerted on the chest of the test dummy; determining, based on the current angles of the first angle sensor, the second angle sensor, and the third angle sensor, current coordinates of the measurement point when an impact is exerted on the chest of the test dummy; and obtaining a three-dimensional displacement of the compressed chest of the test dummy based on the initial coordinates of the measurement point and the current coordinates of the measurement point.

In this way, according to the technical solution provided herein, compressive displacement components of the chest of a dummy in three directions can be determined by a simply structured measuring device consisting of three angle sensors, so as to measure changes in the compressive displacements of the ribs in the chest of the dummy, thereby more realistically reflecting a biological response when an impact is exerted on the chest, and improving the accuracy in measurement of the deformation of the chest of the dummy.

To facilitate understanding of the present invention, the technical solution provided herein will be described in detail below in connection with specific embodiments.

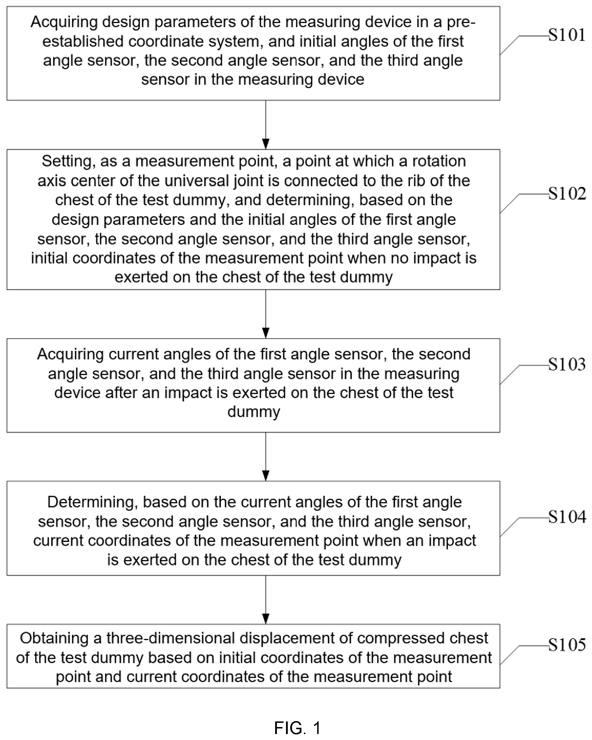

Referring to FIG. 1, FIG. 1 is a flowchart of a method for measuring a displacement of the chest of a test dummy according to an embodiment of the present invention. As shown in FIG. 1, the measuring method comprises the following steps.

In S101: design parameters of the measuring device in a pre-established coordinate system, and initial angles of the first angle sensor, the second angle sensor, and the third angle sensor in the measuring device are acquired.

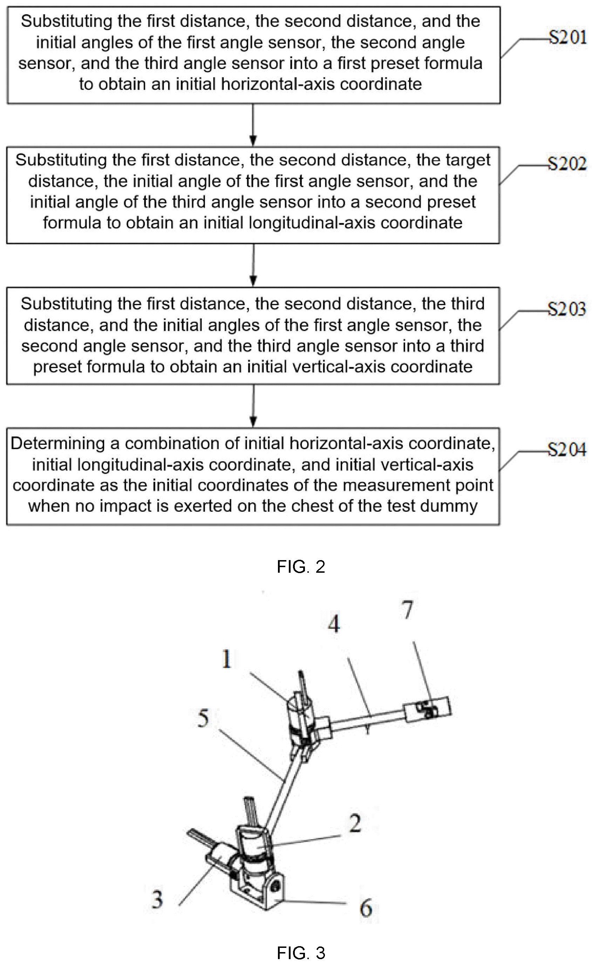

It should be noted that the measuring method according to this embodiment is applied to a device for measuring a displacement of the chest of a test dummy. Referring to FIG. 3, FIG. 3 is a schematic structural diagram of a measuring device according to an embodiment of the present invention. As shown in FIG. 3, the measuring device consists of a first angle sensor 1, a second angle sensor 2, a third angle sensor 3, a universal joint 7, a first swing arm 4, a second swing arm 5, and a mounting base 6. The three angle sensors are fixed by mounting components and connected by the two swing arms (the first swing arm 4 and the second swing arm 5) and related connectors. Data fed back by the angle sensors can represent displacements of a measurement point of the measuring device in X, Y, and Z directions through spatial coordinate transformation. The mounting base 6 of the measuring device is fixed on the spine of the test dummy. The universal joint 7 at the front end of the first swing arm 4 is connected to a rib of the test dummy. The mounting base 6, the third angle sensor 3, the second angle sensor 2, the second swing arm 5, the first angle sensor 1, the first swing arm 4, and the universal joint 7 are connected in sequence.

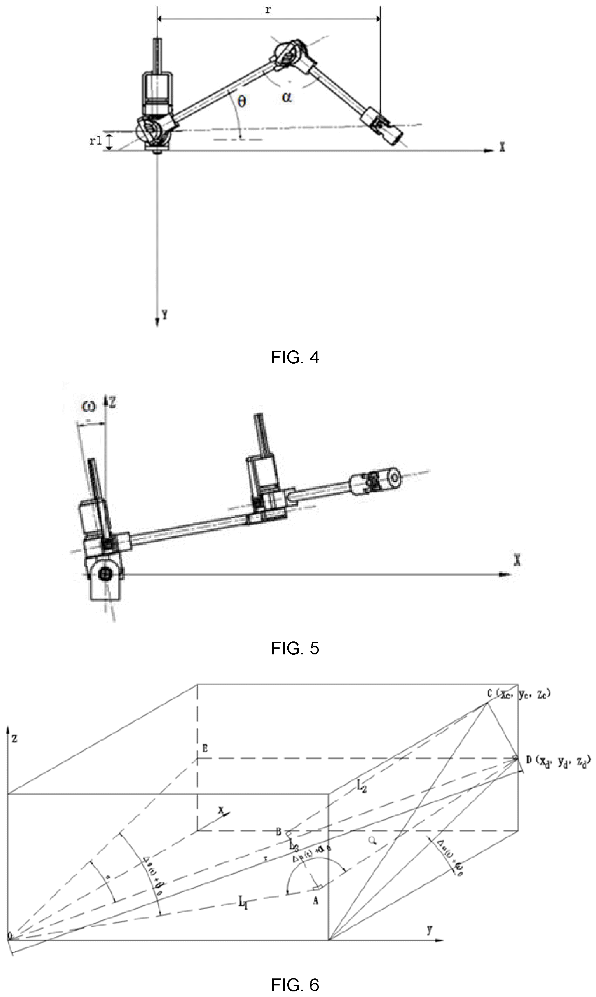

As an example, referring to FIG. 4 and FIG. 5, FIG. 4 is a first schematic diagram of a coordinate system according to an embodiment of the present invention, and FIG. 5 is a second schematic diagram of a coordinate system according to an embodiment of the present invention. FIG. 4 is a top view of the measuring device, and FIG. 5 is a front view of the measuring device. As shown in FIG. 4 and FIG. 5, a three-dimensional coordinate system can be established by setting an intersection point between the rotation axis centerline of the third angle sensor 3 and the outer end surface of the mounting base 6 as the coordinate origin, determining a direction parallel to the mounting plane of the mounting base 6 and perpendicular to the rotation axis centerline of the third angle sensor 3 as an X-axis direction, determining the rotation axis centerline of the third angle sensor 3 as a Y-axis, and determining a direction perpendicular to the mounting base 6 as a Z-axis direction. Here, the design parameters include a first distance $L_1$, a second distance $L_2$, a third distance $L_3$, and a target distance $r_1$. The first distance $L_1$ is a vertical distance from the axial center of the first angle sensor 1 to the rotation center of the universal joint 7. The second distance $L_2$ is a vertical distance from the axial center of the first angle sensor 1 to the axial center of the second angle sensor 2. The third distance $L_3$ is a vertical distance from the axial center of the second angle sensor 2 to the axial center of the third angle sensor 3. The target distance $r_1$ is a vertical distance from the axial center of the second angle sensor 2 to the X-axis. $L_1$, $L_2$, $L_3$, and $r_1$ are generally constants depending on design requirements. The first angle sensor 1 measures an angle $\alpha$ between the first swing arm 4 and the second swing arm 5. The second angle sensor 2 measures an angle $\omega$ between the rotation axis of the second angle sensor 2 and the Z-axis. The third angle sensor 3 measures an angle $\theta$ between the second swing arm 5 and the X-axis. The initial angle $\alpha_0$ of the first angle sensor 1 is an initial angle formed between the first swing arm 4 and the second swing arm 5, i.e., an initial reading of the first angle sensor 1. The initial angle $\omega_0$ of the second angle sensor 2 is an initial angle formed between the rotation axis of the second angle sensor 2 and the Z-axis, i.e., an initial reading of the second angle sensor 2. The initial angle $\theta_0$ of the third angle sensor 3 is an initial angle formed between the second swing arm 5 and the X-axis, i.e., an initial reading of the third angle sensor 3.

Here, the parameters $\alpha_0$, $\theta_0$, and $\omega_0$ can be determined upon the measuring device is mounted onto a rib of the chest of the dummy. Since the rib of the dummy may not fully return to the initial position after each impact, this data cannot be cleared after each test and should be based on actual data. $L_1$, $L_2$, $L_3$, and $r_1$ are design values for the measuring device. These parameters are fixed values after the measuring device is assembled in accordance with design requirements. The above parameters are substituted into a calculation formula for the measuring device to obtain the initial position.

In S102, a point at which the rotation axis center of the universal joint is connected to the rib of the chest of the test dummy is set as a measurement point, and initial coordinates of the measurement point when no impact is exerted on the chest of the test dummy are determined based on the design parameters and the initial angles of the first angle sensor, the second angle sensor, and the third angle sensor.

In this step, in a displacement measuring mechanism combined from the three angle sensors, one angle sensor (the first angle sensor) and two swing arms (the first swing arm and the second swing arm) on both sides of the sensor can be equivalent to one displacement sensor. As shown in FIG. 4, $r$ is a displacement of the equivalent displacement sensor. Then, a three-dimensional displacement of the chest compressed can be obtained by inference in accordance with one displacement sensor and two angle sensors (the second angle sensor and the third angle sensor).

It should be noted that, referring to FIG. 2, FIG. 2 is a flowchart of another method for measuring a displacement of the chest of a test dummy according to an embodiment of the present invention. As shown in FIG. 2, the step of determining, based on the design parameters and the initial angles of the first angle sensor, the second angle sensor, and the third angle sensor, initial coordinates of the measurement point when no impact is exerted on the chest of the test dummy comprises the following steps.

In S201, the first distance, the second distance, and the initial angles of the first angle sensor, the second angle sensor, and the third angle sensor are substituted into a first preset formula to obtain an initial horizontal-axis coordinate.

In this step, the first preset formula is as follows:

$$x_0 = \left[\sqrt{L_1{}^2 + L_2{}^2 - 2L_1L_2\cos\alpha_0}\,\cos\left(\theta_0 - arcsin\frac{L_2\sin\alpha_0}{\sqrt{L_1^2 + L_2^2 - 2L_1L_2\cos\alpha_0}}\right)\right]\cos\omega_0 -$$

$$L_3\sin\omega_0;$$

where $L_1$ is the first distance, $L_2$ is the second distance, $\theta_0$ is the initial angle of the third angle sensor, $\omega_0$ is the initial angle of the second angle sensor, $\alpha_0$ is the initial angle of the first angle sensor, and $x_0$ is a horizontal coordinate of point F which is the initial position (the initial horizontal-axis coordinate of the measurement point).

In S202, the first distance, the second distance, the target distance, the initial angle of the first angle sensor, and the initial angle of the third angle sensor are substituted into a second preset formula to obtain an initial longitudinal-axis coordinate.

In this step, the second preset formula is as follows:

$$y_0 = \sqrt{L_1{}^2 + L_2{}^2 - 2L_1L_2\cos\alpha_0}\,\sin\left(\theta_0 - arcsin\frac{L_2\sin\alpha_0}{\sqrt{L_1^2 + L_2^2 - 2L_1L_2\cos\alpha_0}}\right) + r_1;$$

where $r_1$ is the target distance, and $y_0$ is a longitudinal coordinate of point F which is the initial position (the initial longitudinal-axis coordinate of the measurement point).

In S203, the first distance, the second distance, the third distance, and the initial angles of the first angle sensor, the second angle sensor, and the third angle sensor are substituted into a third preset formula to obtain an initial vertical-axis coordinate.

In this step, the third preset formula is as follows:

$$z_0 = \left[\sqrt{L_1{}^2 + L_2{}^2 - 2L_1L_2\cos\alpha_0}\,\cos\left(\theta_0 - arcsin\frac{L_2\sin\alpha_0}{\sqrt{L_1^2 + L_2^2 - 2L_1L_2\cos\alpha_0}}\right)\right]\sin\omega_0 +$$

$$L_3\cos\omega_0;$$

where $z_0$ is a vertical coordinate of point F which is the initial position (the initial vertical-axis coordinate of the measurement point).

In S204, a combination of the initial horizontal-axis coordinate, the initial longitudinal-axis coordinate, and the initial vertical-axis coordinate is determined as the initial coordinates of the measurement point when no impact is exerted on the chest of the test dummy.

In this step, the coordinates $(x_0, y_0, z_0)$ of point F which is the initial position, i.e., the initial coordinates of the measurement point, can be obtained by the steps S201 to S203.

In S103, current angles of the first angle sensor, the second angle sensor, and the third angle sensor in the measuring device are acquired after an impact is exerted on the chest of the test dummy.

In this step, after an impact is exerted on the chest of the test dummy, the readings of the sensors are re-read to determine the coordinates $(x_C, y_C, z_C)$ of point C which is the position of the measurement point on the surface of the chest of the test dummy upon impact, i.e., the current coordinates of the measurement point.

In S104, current coordinates of the measurement point when an impact is exerted on the chest of the test dummy are determined based on the current angles of the first angle sensor, the second angle sensor, and the third angle sensor.

It should be noted that the step of determining, based on the current angles of the first angle sensor, the second angle sensor, and the third angle sensor, current coordinates of the measurement point when an impact is exerted on the chest of the test dummy comprises the following steps.

In S1041, the first distance, the second distance, and the current angles of the first angle sensor, the second angle sensor, and the third angle sensor are substituted into a fourth preset formula to obtain a current horizontal-axis coordinate.

In this step, the fourth preset formula is as follows:

$$x_c = \left[\sqrt{L_1{}^2 + L_2{}^2 - 2L_1L_2\cos(\Delta\alpha(t) + \alpha_0)}\,\cos\left(\Delta\theta(t) + \theta_0 - arcsin\frac{L_2\sin(\Delta\alpha(t) + \alpha_0)}{\sqrt{L_1^2 + L_2^2 - 2L_1L_2\cos(\Delta\alpha(t) + \alpha_0)}}\right)\right]\cos(\Delta\omega(t) + \omega_0) - L_3\sin(\Delta\omega(t) + \omega_0)$$
$$;$$

where $(\Delta\alpha(t) + \alpha_0)$ is the current angle of the first angle sensor, $(\Delta\theta(t) + \theta_0)$ is the current angle of the third angle sensor, $(\omega_0 + \Delta\omega(t))$ is the current angle of the second angle sensor, and $x_C$ is the horizontal coordinate of point C which is the current position (the current horizontal-axis coordinate of the measurement point).

In S1042, the first distance, the second distance, the target distance, the current angle of the first angle sensor, and the current angle of the third angle sensor are substituted into a fifth preset formula to obtain a current longitudinal-axis coordinate.

In this step, the fifth preset formula is as follows:

$$y_c = \sqrt{L_1^2 + L_2^2 - 2L_1 L_2 \cos(\Delta\alpha(t) + \alpha_0)} \sin(\Delta\theta(t) + \theta_0 -$$

$$arcsin \frac{L_2 \sin(\Delta\alpha(t) + \alpha_0)}{\sqrt{L_1^2 + L_2^2 - 2L_1 L_2 \cos(\Delta\alpha(t) + \alpha_0)}}) + r_1;$$

where $y_C$ is the longitudinal coordinate of point C which is the current position (the current longitudinal-axis coordinate of the measurement point).

In S1043, the first distance, the second distance, the third distance, and the current angles of the first angle sensor, the second angle sensor, and the third angle sensor are substituted into a sixth preset formula to obtain a current vertical-axis coordinate.

In this step, the sixth preset formula is as follows:

$$z_c = \left[\sqrt{L_1^2 + L_2^2 - 2L_1 L_2 \cos(\Delta\alpha(t) + \alpha_0)} \cos\left(\Delta\theta(t) + \theta_0 - arcsin \frac{L_2 \sin(\Delta\alpha(t) + \alpha_0)}{\sqrt{L_1^2 + L_2^2 - 2L_1 L_2 \cos(\Delta\alpha(t) + \alpha_0)}}\right)\right] \sin(\Delta\omega(t) + \omega_0) + L_3 \cos(\Delta\omega(t) + \omega_0)$$
$$;$$

where $z_C$ is the vertical coordinate of point C which is the current position (the current vertical-axis coordinate of the measurement point).

In S1044, a combination of the current horizontal-axis coordinate, the current longitudinal-axis coordinate, and the current vertical-axis coordinate is determined as the current coordinates of the measurement point when an impact is exerted on the chest of the test dummy.

In this step, the coordinates $(x_C, y_C, z_C)$ of point C which is the current position, i.e., the current coordinates of the measurement point when an impact is exerted on the chest of the test dummy, can be obtained by the steps S1041 to S1044.

Here, it can be seen that the first preset formula is a formula in which the measurement time parameters $(\Delta\alpha(t), \Delta\theta(t), \Delta\omega(t))$ in the fourth preset formula are zero; similarly, the second preset formula is a formula in which the measurement time parameters in the fifth preset formula are zero; and the third preset formula is a formula in which the measurement time parameters in the sixth preset formula are zero.

It should be noted that the process of inferring formulas for the coordinates of point C and the coordinates of point F in accordance with one displacement sensor and two angular displacement sensors is performed as follows.

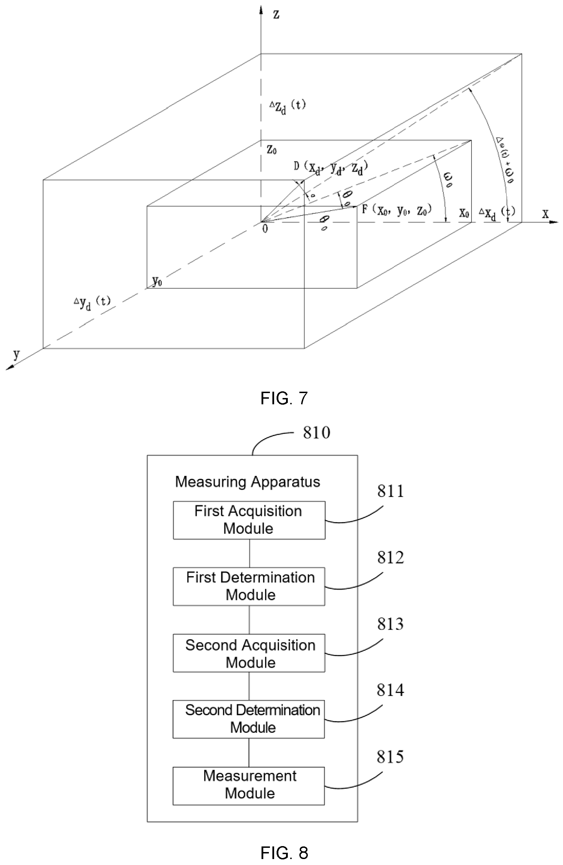

Referring to FIG. 6 and FIG. 7, FIG. 6 is a first schematic diagram of a spatial geometry principle according to an embodiment of the present invention, and FIG. 7 is a second schematic diagram of a spatial geometry principle according to an embodiment of the present invention. As shown in FIG. 6, the following result can be calculated from the trigonometric function relationship:

$$r^2 = OD^2 = AO^2 + AD^2 - 2 \times AO \times AD \times \cos(\Delta\alpha(t) + \alpha_0);$$

where $AO = L_1$, $AD = BC = L_2$, $AB = CD = L_3$, from which the following formula can be deduced:

$$r = OD = \sqrt{L_1^2 + L_2^2 - 2L_1 L_2 \cos(\Delta\alpha(t) + \alpha_0)};$$

where r is the displacement of the equivalent displacement sensor, which is equivalent to the vertical distance from the rotation center of the universal joint to the Y-axis in FIG. 4. As can be seen from FIG. 6, an angle of rotation of the equivalent displacement sensor along the angular displacement sensor in the Z-axis direction is calculated by:

$$\sigma = \Delta\theta(t) + \theta_0 - \angle DOA.$$

Here, the following formula can be known from the trigonometric function relationship:

$$\frac{OD}{sin(\Delta\alpha(t)+\alpha_0)} = \frac{AD}{sin\angle DOA}.$$

Therefore:

$$\sigma = \Delta\theta(t) + \theta_0 - arcsin\frac{L_2\,sin(\Delta\alpha(t)+\alpha_0)}{\sqrt{L_1^2+L_2^2-2L_1L_2\,cos(\Delta\alpha(t)+\alpha_0)}}.$$

Therefore, the coordinates of point D of the measuring device in the coordinate system are calculated by the following formulas:

$$x_d(t) = r\,cos\,\sigma\,cos(\Delta\omega(t) + \omega_0);$$

$$x_d(t) = \left[\sqrt{L_1^2+L_2^2-2L_1L_2\,cos(\Delta\alpha(t)+\alpha_0)}\,cos\left(\Delta\theta(t)+\theta_0-arcsin\frac{L_2\,sin(\Delta\alpha(t)+\alpha_0)}{\sqrt{L_1^2+L_2^2-2L_1L_2\,cos(\Delta\alpha(t)+\alpha_0)}}\right)\right]cos(\Delta\omega(t)+\omega_0);$$

$$y_d(t) = r\,sin\,\sigma + r_1;$$

$$y_d(t) = \sqrt{L_1^2+L_2^2-2L_1L_2\,cos(\Delta\alpha(t)+\alpha_0)}\,sin\left(\Delta\theta(t)+\theta_0-arcsin\frac{L_2\,sin(\Delta\alpha(t)+\alpha_0)}{\sqrt{L_1^2+L_2^2-2L_1L_2\,cos(\Delta\alpha(t)+\alpha_0)}}\right)+r_1;$$

$$z_d(t) = r\,cos\,\sigma\,sin(\Delta\omega(t) + \omega_0);$$

$$z_d(t) = \left[\sqrt{L_1^2+L_2^2-2L_1L_2\,cos(\Delta\alpha(t)+\alpha_0)}\,cos\left(\Delta\theta(t)+\theta_0-arcsin\frac{L_2\,sin(\Delta\alpha(t)+\alpha_0)}{\sqrt{L_1^2+L_2^2-2L_1L_2\,cos(\Delta\alpha(t)+\alpha_0)}}\right)\right]sin(\Delta\omega(t)+\omega_0).$$

As shown in FIG. 6, the coordinates of point C can be determined according to the geometric relationship, specifically by the following formulas:

$$x_c = x_d - L_3\,sin(\Delta\omega(t) + \omega_0);$$

$$x_c = r\,cos\,\sigma\,cos(\Delta\omega(t) + \omega_0) - L_3\,sin(\Delta\omega(t) + \omega_0);$$

$$x_c = \left[\sqrt{L_1^2+L_2^2-2L_1L_2\,cos(\Delta\alpha(t)+\alpha_0)}\,cos\left(\Delta\theta(t)+\theta_0-arcsin\frac{L_2\,sin(\Delta\alpha(t)+\alpha_0)}{\sqrt{L_1^2+L_2^2-2L_1L_2\,cos(\Delta\alpha(t)+\alpha_0)}}\right)\right]cos(\Delta\omega(t)+\omega_0) - L_3\,sin(\Delta\omega(t)+\omega_0);$$

$$y_c = y_d = r\,sin\,\sigma + r_1;$$

$$y_c = \sqrt{L_1^2+L_2^2-2L_1L_2\,cos(\Delta\alpha(t)+\alpha_0)}\,sin(\Delta\theta(t)+\theta_0-$$

$$arcsin\frac{L_2\,sin(\Delta\alpha(t)+\alpha_0)}{\sqrt{L_1^2+L_2^2-2L_1L_2\,cos(\Delta\alpha(t)+\alpha_0)}})+r_1;$$

$$z_c = z_d + L_3 \cos(\Delta\omega(t) + \omega_0)$$

$$z_c = \left[ \sqrt{L_1{}^2 + L_2{}^2 - 2L_1 L_2 \cos(\Delta\alpha(t) + \alpha_0)} \cos\left( \Delta\theta(t) + \theta_0 - arcsin\frac{L_2 \sin(\Delta\alpha(t) + \alpha_0)}{\sqrt{L_1^2 + L_2^2 - 2L_1 L_2 \cos(\Delta\alpha(t) + \alpha_0)}} \right) \right] \sin(\Delta\omega(t) + \omega_0) + L_3 \cos(\Delta\omega(t) + \omega_0)$$

$$= r \cos\sigma \sin(\Delta\omega(t) + \omega_0) + L_3 \cos(\Delta\omega(t) + \omega_0).$$

As shown in FIG. 7, $(x_0, y_0, z_0)$ represents point F in the coordinate system, which corresponds to the spatial coordinates of the measurement point at the rotation axis center of the universal joint 7 at the front end of the first swing arm 4 of the measuring device in the coordinate system, namely, the initial coordinates of the measurement point. The displacement increment from point F to point D in the coordinate system is $\Delta x_d(t)$ in the X-axis direction, $\Delta y_d(t)$ in the Y-axis direction, and $\Delta z_d(t)$ in the Z-axis direction. r is the length (in unit of mm) from the equivalent point D relative to point O at any time t during testing from point F to point D. Through the above-mentioned formula for r, the angle $\alpha$ can be converted into a length. $\Delta\theta(t)$ is the reading (in unit of degrees) of the angular displacement sensor along the Y-axis direction in the measuring device at any time t during testing. $\Delta\omega(t)$ is the reading (in unit of degrees) of the angular displacement sensor along the Z-axis direction in the measuring device at any time t during testing. The coordinates of point C can be obtained from the determined coordinates of point D. When t = 0, the coordinates $(x_0, y_0, z_0)$ of point F which is the initial position can be calculated according to the above-mentioned formulas for the coordinates of point C, namely:

$$x_0 = r \cos\sigma \cos\omega_0 - L_3 \sin\omega_0;$$

$$x_0 = \left[ \sqrt{L_1{}^2 + L_2{}^2 - 2L_1 L_2 \cos\alpha_0} \cos\left( \theta_0 - arcsin\frac{L_2 \sin\alpha_0}{\sqrt{L_1^2 + L_2^2 - 2L_1 L_2 \cos\alpha_0}} \right) \right] \cos\omega_0 - L_3 \sin\omega_0;$$

$$y_0 = r \sin\sigma + r_1;$$

$$y_0 = \sqrt{L_1{}^2 + L_2{}^2 - 2L_1 L_2 \cos\alpha_0} \sin\left( \theta_0 - arcsin\frac{L_2 \sin\alpha_0}{\sqrt{L_1^2 + L_2^2 - 2L_1 L_2 \cos\alpha_0}} \right) + r_1;$$

$$z_0 = r \cos\sigma \sin\omega_0 + L_3 \cos\omega_0;$$

$$z_0 = \left[ \sqrt{L_1{}^2 + L_2{}^2 - 2L_1 L_2 \cos\alpha_0} \cos\left( \theta_0 - arcsin\frac{L_2 \sin\alpha_0}{\sqrt{L_1^2 + L_2^2 - 2L_1 L_2 \cos\alpha_0}} \right) \right] \sin\omega_0 + L_3 \cos\omega_0.$$

Thus, the solution formulas for the initial coordinates of the measurement point and the current coordinates of the measurement point after impact can be obtained.

In S105, a three-dimensional displacement of the compressed chest of the test dummy is obtained based on the initial coordinates of the measurement point and the current coordinates of the measurement point.

It should be noted that the step of obtaining a three-dimensional displacement of the compressed chest of the test dummy based on the initial coordinates of the measurement point and the current coordinates of the measurement point comprises:

S1051 of determining a difference between a current horizontal-axis coordinate in the current coordinates of the measurement point and an initial horizontal-axis coordinate in the initial coordinates of the measurement point as a current horizontal displacement;

S1052 of determining a difference between a current longitudinal-axis coordinate in the current coordinates of the measurement point and an initial longitudinal-axis coordinate in the initial coordinates of the measurement point as a current longitudinal displacement;

S1053 of determining a difference between a current vertical-axis coordinate in the current coordinates of the measurement point and an initial vertical-axis coordinate in the initial coordinates of the measurement point as a current vertical displacement; and

S1054 of determining a combination of the current horizontal displacement, the current longitudinal displacement, and the current vertical displacement as the three-dimensional displacement of the compressed chest of the test dummy.

In the steps S1051 to S1054, a change in compressive displacement of the measurement point on the surface of the chest of the test dummy before and after impact, i.e., an increment from point F to point C in each directional axis, can be determined, specifically by the following formulas:

$$\Delta x = x_C - x_0;$$

$$\Delta y = y_C - y_0;$$

$$\Delta z = z_C - z_0;$$

where $\Delta x$ is the current horizontal displacement, $\Delta y$ is the current longitudinal displacement, $\Delta z$ is the current vertical displacement, and the three-dimensional displacement of the compressed chest of the test dummy is represented by ($\Delta x$, $\Delta y$, $\Delta z$). The spatial displacement of the chest of the dummy under force can be determined by the equation for the increment from point F indicating the coordinates of the initial position to point C in each directional axis, which provides an algorithmic basis for calibration and production of software modules. The coordinates of the initial position should be checked in each test.

It should be noted that the measuring method further comprises:

firstly, obtaining a three-dimensional displacement of a compressed upper-left rib of the chest of the test dummy by a measuring device with a universal joint connected to the upper-left rib of the test dummy;

secondly, obtaining a three-dimensional displacement of a compressed lower-left rib of the chest of the test dummy by a measuring device with a universal joint connected to the lower-left rib of the test dummy;

thirdly, obtaining a three-dimensional displacement of a compressed upper-right rib of the chest of the test dummy by a measuring device with a universal joint connected to the upper-right rib of the test dummy;

fourthly, obtaining a three-dimensional displacement of a compressed lower-right rib of the chest of the test dummy by a measuring device with a universal joint connected to the lower-right rib of the test dummy;

fifthly, determining an average displacement of the compressed chest of the test dummy from the three-dimensional displacement of the compressed upper-left rib, the three-dimensional displacement of the compressed lower-left rib, the three-dimensional displacement of the compressed upper-right rib, and the three-dimensional displacement of the compressed lower-right rib of the chest of the test dummy;

sixthly, determining whether the average displacement of the compressed chest of the test dummy is within a preset calibrated chest displacement range; and

seventhly, if yes, determining that the biomimetic performance of the chest of the test dummy meets the standard.

In the first to seventh steps, generally, one measuring device is mounted on each of the upper left, upper right, lower left, and lower right sides of the spine inside the chest of the dummy. This measuring method is used to measure the respective compressive displacements of ribs at different positions after a force is exerted on the chest, for assessing the risk of injury in a human body.

As an example, mounting bases of four measuring devices were fixed to the spine of a dummy, respectively, and four universal joints were connected to the front ends of the upper left, upper right, lower left, and lower right ribs of the dummy, respectively. In the following example, only one of the measuring devices was selected for calculation to illustrate the measuring method. A coordinate system as shown in FIG. 4 and FIG. 5 was established by setting an intersection point between the rotation axis center of the third angle sensor and the outer end surface of the mounting base as the coordinate origin. According to the established coordinate system, the measuring device had several fixed parameters of $L_1$ = 51 mm, $L_2$ = 69.5 mm, $L_3$ = 20 mm, and $r_1$ = 10.5 mm, respectively. After the measuring device was mounted inside the thoracic cavity of the dummy, the initial values of the three angle sensors were read according to those displayed on a data collector, and recorded as follows: $\alpha_0$ = -20.96°, $\theta_0$ = 56.17°, and $\omega_0$ = -111.52°. The above $L_1, L_2, L_3, r_1, \alpha_0, \theta_0,$ and $\omega_0$ were substituted into the formulas (the first preset formula, the second preset formula, and the third preset formula) to respectively calculate the initial coordinates $(x_0, y_0, z_0)$ of the measuring device mounted to the chest of the dummy on which no impact was exerted, namely, (109.59, 0.56, 22.51). In accordance with calibration requirements for impact on the chest of the dummy, the chest of the dummy was struck at a certain speed by using an impact hammer. During the strike, the rib of the dummy was compressed to generate a compressive displacement. The values of the three angle sensors at the same moment were read again according to those displayed on the data collector, and recorded as follows: $\alpha_1 = \alpha_0 + \Delta\alpha(t)$ = -20.96°, $\theta_1 = \theta_0 + \Delta\theta(t)$ = 56.17°, and $\omega_1 = \omega_0 + \Delta\omega(t)$ = -111.52°. The recorded values of $\alpha_1, \theta_1, \omega_1, L_1, L_2, L_3,$ and $r_1$ were substituted into the formulas (the fourth preset formula, the fifth preset formula, and the sixth preset formula) to respectively calculate the coordinates $(x_C, y_C, z_C)$, at the rib front end (measurement point), of the measuring device mounted to the chest of the dummy under impact, namely, (56.95, 8.60, 19.47). A three-dimensional displacement indicating the displacement of the chest of the dummy under compression could be calculated using the following formulas:

$$\Delta x = x_C - x_0 = 56.95 - 109.59 = -52.64 \text{ mm};$$

$$\Delta y = y_C - y_0 = 8.60 - 0.56 = 8.04 \text{ mm};$$

$$\Delta z = z_C - z_0 = 19.47 - 22.51 = -3.04 \text{ mm}.$$

Similarly, the three-dimensional displacements of the four upper left, upper right, lower left, and lower right ribs of the dummy can be calculated by a method similar to that described above, respectively. By calculating the average value of the three-dimensional displacements of the four ribs and comparing it with the range required by chest calibration, it can be investigated whether the biomimetic performance of the chest of the dummy meets the standard. A three-dimensional displacement indicating a displacement of the chest of a crash test dummy under compression can be effectively measured by the measuring method according to this embodiment, which provides more accurate and reliable data reference for dummy calibration and dummy injury assessment.

In summary, the measuring method according to this embodiment is applied to a measuring device, and the measuring device involves only three angle sensors (which may be the same type of angle sensors), which can be implemented conveniently and obtained easily. Three angle changes are converted into spatial displacement changes by using the trigonometric function relationship. A displacement component in each direction is given to accurately calculate a compressive displacement of the chest of a dummy, and changes in compressive displacements of ribs at different positions of the chest of the dummy can also be measured. These data can more realistically reflect a biological response when an impact is exerted on the chest, correspond to passive safety and occupant injury assessment indicators, and are more advantageous to the safety assessment of personnel protection in vehicles.

A method for measuring a displacement of the chest of a test dummy according to an embodiment of the present invention is applied to a device for measuring a displacement of the chest of a test dummy. The measuring device consists of a first angle sensor, a second angle sensor, a third angle sensor, a universal joint, a first swing arm, and a second swing arm. The third angle sensor, the second angle sensor, the second swing arm, the first angle sensor, the first swing arm, and the universal joint are connected in sequence. The front end of the universal joint is connected to a rib of the chest of the test dummy. The measuring method comprises: acquiring design parameters of the measuring device in a pre-established coordinate system, and initial angles of the first angle sensor, the second angle sensor, and the third angle sensor in the measuring device; setting, as a measurement point, a point at which a rotation axis center of the universal joint is connected to the rib of the chest of the test dummy, and determining, based on the design parameters and the initial angles of the first angle sensor, the second angle sensor, and the third angle sensor, initial coordinates of the measurement point when no impact is exerted on the chest of the test dummy; acquiring current angles of the first angle sensor, the second angle sensor, and the third angle sensor in the measuring device after an impact is exerted on the chest of the test dummy;

determining, based on the current angles of the first angle sensor, the second angle sensor, and the third angle sensor, current coordinates of the measurement point when an impact is exerted on the chest of the test dummy; and obtaining a three-dimensional displacement of the compressed chest of the test dummy based on the initial coordinates of the measurement point and the current coordinates of the measurement point.

In this way, according to the technical solution provided herein, compressive displacement components of the chest of a dummy in three directions can be determined by a simply structured measuring device consisting of three angle sensors, so as to measure changes in the compressive displacements of the ribs in the chest of the dummy, thereby more realistically reflecting a biological response when an impact is exerted on the chest, and improving the accuracy in measurement of the deformation of the chest of the dummy.

Based on the same inventive concept, an embodiment of the present invention further provides an apparatus for measuring a displacement of the chest of a test dummy corresponding to the above-mentioned method for measuring a displacement of the chest of a test dummy. Since the apparatus in the embodiment of the present invention solves the problem based on a principle similar to the method in the foregoing embodiment, the implementation of the apparatus may be carried out with reference to the implementation of the method, and repeated descriptions will be omitted.

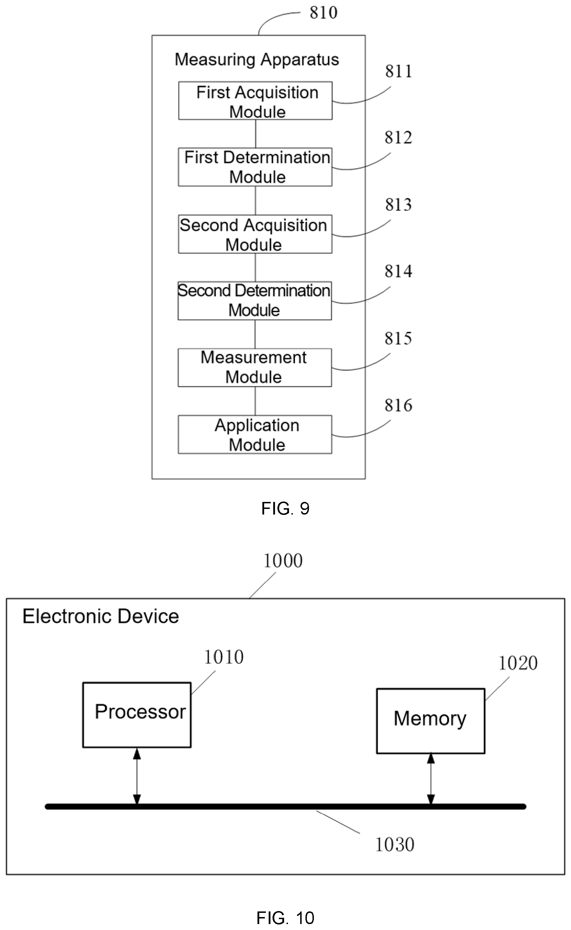

Referring to FIG. 8 and FIG. 9, FIG. 8 is a first structural diagram of an apparatus for measuring a displacement of the chest of a test dummy according to an embodiment of the present invention, and FIG. 9 is a second structural diagram of an apparatus for measuring a displacement of the chest of a test dummy according to an embodiment of the present invention. The apparatus is applied to a device for measuring a displacement of the chest of a test dummy. The measuring device consists of a first angle sensor, a second angle sensor, a third angle sensor, a universal joint, a first swing arm, and a second swing arm. The third angle sensor, the second angle sensor, the second swing arm, the first angle sensor, the first swing arm, and the universal joint are connected in sequence. The front end of the universal joint is connected to a rib of the chest of the test dummy. As shown in FIG. 8, the measuring apparatus 810 comprises:

a first acquisition module 811 configured to acquire design parameters of the measuring device in a pre-established coordinate system, and initial angles of the first angle sensor, the second angle sensor, and the third angle sensor in the measuring device;

a first determination module 812 configured to set, as a measurement point, a point at which a rotation axis center of the universal joint is connected to the rib of the chest of the test dummy, and determine, based on the design parameters and the initial angles of the first angle sensor, the second angle sensor, and the third angle sensor, initial coordinates of the measurement point when no impact is exerted on the chest of the test dummy;

a second acquisition module 813 configured to acquire current angles of the first angle sensor, the second angle sensor, and the third angle sensor in the measuring device after an impact is exerted on the chest of the test dummy;

a second determination module 814 configured to determine, based on the current angles of the first angle sensor, the second angle sensor, and the third angle sensor, current coordinates of the measurement point when an impact is exerted on the chest of the test dummy; and

a measurement module 815 configured to obtain a three-dimensional displacement of the compressed chest of the test dummy based on the initial coordinates of the measurement point and the current coordinates of the measurement point.

Optionally, the design parameters include a first distance, a second distance, a third distance, and a target distance. The first distance is a vertical distance from an axial center of the first angle sensor to the rotation axis center of the universal joint. The second distance is a vertical distance from the axial center of the first angle sensor to an axial center of the second angle sensor. The third distance is a vertical distance from the axial center of the second angle sensor to an axial center of the third angle sensor. The target distance is a vertical distance from the axial center of the second angle sensor to the X-axis of the coordinate system. When the first determination module 812 is configured to determine, based on the design parameters and the initial angles of the first angle sensor, the second angle sensor, and the third angle sensor, initial coordinates of the measurement point when no impact is exerted on the chest of the test dummy, the first determination module 812 is specifically configured to:

substitute the first distance, the second distance, and the initial angles of the first angle sensor, the second angle sensor, and the third angle sensor into a first preset formula to obtain an initial horizontal-axis coordinate;

substitute the first distance, the second distance, the target distance, the initial angle of the first angle sensor, and the initial angle of the third angle sensor into a second preset formula to obtain an initial longitudinal-axis coordinate, wherein the first angle sensor measures an angle between the first swing arm and the second swing arm, the second angle sensor measures an angle between a rotation axis of the second angle sensor and a Z-axis, and the third angle sensor measures an angle between the second swing arm and the X-axis;

substitute the first distance, the second distance, the third distance, and the initial angles of the first angle sensor, the second angle sensor, and the third angle sensor into a third preset formula to obtain an initial vertical-axis coordinate; and

determine a combination of the initial horizontal-axis coordinate, the initial longitudinal-axis coordinate, and the initial vertical-axis coordinate as the initial coordinates of the measurement point when no impact is exerted on the chest of the test dummy.

Optionally, when the second determination module 814 is configured to determine, based on the current angles of the first angle sensor, the second angle sensor, and the third angle sensor, current coordinates of the measurement point when an impact is exerted on the chest of the test dummy, the second determination module 814 is specifically configured to:

substitute the first distance, the second distance, and the current angles of the first angle sensor, the second angle sensor, and the third angle sensor into a fourth preset formula to obtain a current horizontal-axis coordinate;

substitute the first distance, the second distance, the target distance, the current angle of the first angle sensor, and the current angle of the third angle sensor into a fifth preset formula to obtain a current longitudinal-axis coordinate;

substitute the first distance, the second distance, the third distance, and the current angles of the first angle sensor, the second angle sensor, and the third angle sensor into a sixth preset formula to obtain a current vertical-axis coordinate; and

determine a combination of the current horizontal-axis coordinate, the current longitudinal-axis coordinate, and the current vertical-axis coordinate as the current coordinates of the measurement point when an impact is exerted on the chest of the test dummy.

Optionally, the first preset formula is a formula in which a measurement time parameter in the fourth preset formula is zero; the second preset formula is a formula in which a measurement time parameter in the fifth preset formula is zero; and the third preset formula is a formula in which a measurement time parameter in the sixth preset formula is zero.

Optionally, when the measurement module 815 is configured to obtain a three-dimensional displacement of the compressed chest of the test dummy based on the initial coordinates of the measurement point and the current coordinates of the measurement point, the measurement module 815 is specifically configured to:

determine a difference between the current horizontal-axis coordinate in the current coordinates of the measurement point and the initial horizontal-axis coordinate in the initial coordinates of the measurement point as a current horizontal displacement;

determine a difference between the current longitudinal-axis coordinate in the current coordinates of the measurement point and the initial longitudinal-axis coordinate in the initial coordinates of the measurement point as a current longitudinal displacement;

determine a difference between the current vertical-axis coordinate in the current coordinates of the measurement point and the initial vertical-axis coordinate in the initial coordinates of the measurement point as a current vertical displacement; and

determine a combination of the current horizontal displacement, the current longitudinal displacement, and the current vertical displacement as the three-dimensional displacement of the compressed chest of the test dummy.

Optionally, as shown in FIG. 9, the measuring apparatus 810 further comprises an application module 816, and the application module 816 is configured to:

obtain a three-dimensional displacement of a compressed upper-left rib of the chest of the test dummy by a measuring device with a universal joint connected to the upper-left rib of the test dummy;

obtain a three-dimensional displacement of a compressed lower-left rib of the chest of the test dummy by a measuring device with a universal joint connected to the lower-left rib of the test dummy;

obtain a three-dimensional displacement of a compressed upper-right rib of the chest of the test dummy by a measuring device with a universal joint connected to the upper-right rib of the test dummy;

obtain a three-dimensional displacement of a compressed lower-right rib of the chest of the test dummy by a measuring device with a universal joint connected to the lower-right rib of the test dummy;

determine an average displacement of the compressed chest of the test dummy from the three-dimensional displacement of the compressed upper-left rib, the three-dimensional displacement of the compressed lower-left rib, the three-dimensional displacement of the compressed upper-right rib, and the three-dimensional displacement of the compressed lower-right rib of the chest of the test dummy;

determine whether the average displacement of the compressed chest of the test dummy is within a preset calibrated chest displacement range; and

if yes, determine that the biomimetic performance of the chest of the test dummy meets the standard.

An apparatus for measuring a displacement of the chest of a test dummy according to an embodiment of the present invention is applied to a device for measuring a displacement of the chest of a test dummy. The measuring device consists of a first angle sensor, a second angle sensor, a third angle sensor, a universal joint, a first swing arm, and a second swing arm. The third angle sensor, the second angle sensor, the second swing arm, the first angle sensor, the first swing arm, and the universal joint are connected in sequence. The front end of the universal joint is connected to a rib of the chest of the test dummy. The measuring apparatus comprises: a first acquisition module configured to acquire design parameters of the measuring device in a pre-established coordinate system, and initial angles of the first angle sensor, the second angle sensor, and the third angle sensor in the measuring device; a first determination module configured to set, as a measurement point, a point at which a rotation axis center of the universal joint is connected to the rib of the chest of the test dummy, and determine, based on the design parameters and the initial angles of the first angle sensor, the second angle sensor, and the third angle sensor, initial coordinates of the measurement point when no impact is exerted on the chest of the test dummy; a second acquisition module configured to acquire current angles of the first angle sensor, the second angle sensor, and the third angle sensor in the measuring device after an impact is exerted on the chest of the test dummy; a second determination module configured to determine, based on the current angles of the first angle sensor, the second angle sensor, and the third angle sensor, current coordinates of the measurement point when an impact is exerted on the chest of the test dummy; and a measurement module configured to obtain a three-dimensional displacement of the compressed chest of the test dummy based on the initial coordinates of the measurement point and the current coordinates of the measurement point.

In this way, according to the technical solution provided herein, compressive displacement components of the chest of a dummy in three directions can be determined by a simply structured measuring device consisting of three angle sensors, so as to measure changes in the compressive displacements of the ribs in the chest of the dummy, thereby more realistically reflecting a biological response when an impact is exerted on the chest, and improving the accuracy in measurement of the deformation of the chest of the dummy.

Referring to FIG. 10, FIG. 10 is a schematic structural diagram of an electronic device according to an embodiment of the present invention. As shown in FIG. 10, the electronic device 1000 comprises a processor 1010, a memory 1020, and a bus 1030.

The memory 1020 stores machine-readable instructions executable by the processor 1010. When the electronic device 1000 is running, the processor 1010 communicates with the memory 1020 via the bus 1030. The machine-readable instructions may be executed by the processor 1010 to execute the steps of the method for measuring a displacement of the chest of a test dummy in the method embodiments as shown in FIG. 1 and FIG. 2 described above. Specific implementation may be performed with reference to the method embodiments and will not be described in detail herein.

An embodiment of the present invention further provides a computer-readable storage medium. A computer program is stored on the computer-readable storage medium. The computer program is run by a processor to execute the steps of the method for measuring a displacement of the chest of a test dummy in the method embodiments as shown in FIG. 1 and FIG. 2 described above. Specific implementation may be performed with reference to the method embodiments and will not be described in detail herein.

It will be clearly appreciated by those skilled in the art that, for convenience and brevity of the description, specific operating processes of the system, apparatus, and units described above may be performed with reference to the corresponding processes in the foregoing method embodiments and will not be described in detail herein.

In several embodiments according to the present invention, it should be understood that the disclosed system, apparatus, and method may be implemented in other ways. The embodiments of the apparatus described above are merely illustrative in nature. For example, the units are divided only by logical functions, and additional division modes may be adopted in practical implementation. For another example, multiple units or components may be combined or integrated into another system, or some features may be omitted or not executed. In addition, the mutual coupling, or direct coupling or communication connection illustrated or discussed may be implemented via indirect coupling or communication between some communication interfaces, apparatuses, or units, which may be electronic, mechanical, or in other forms.

The units described as separate components may be or not be separated physically. The components illustrated as units may be or not be physical units. In other words, they may be located at one place or they may be distributed onto multiple network units. Some or all of the units may be selected as actually required to fulfill the purposes of the solutions of the present embodiments.

Besides, the individual functional units in the embodiments of the present invention may be integrated into one processing unit, or each of the units may be physically stand-alone, or two or more of the units may be integrated into one unit.

When implemented in the form of a software functional module and sold or used as an independent product, the functions may be stored in a nonvolatile computer-readable storage medium executable by a processor. Based on such understanding, a technical solution of the present invention essentially, or the part thereof contributing to the prior art, or a part of the technical solution may be embodied in the form of a software product. The computer software product is stored in a storage medium, and includes a number of instructions for causing a computer device (which may be a personal computer, a server, a network device, or the like) to execute all or some of the steps of the methods described in the various embodiments of the present invention. The preceding storage medium includes any medium that can store program code, such as a USB flash disk, a mobile hard disk, a read-only memory (ROM), a random access memory (RAM), a magnetic disk, or an optical disk.

Finally, it should be noted that the embodiments described above are merely specific embodiments of the present invention, which are intended to illustrate the technical solutions of the present invention and not intended to limit the present invention, and to which the scope of protection of the present invention is not limited. Although the present invention has been illustrated in detail with reference to the foregoing embodiments, it should be understood by those skilled in the art that the technical solutions described in the foregoing embodiments can be modified, or variations thereof can be readily conceived of, or some of the technical features thereof can be equivalently replaced by those skilled in the art within the technical scope disclosed in the present invention. Such modifications, variations, or replacements do not cause the essence of the corresponding technical solutions to depart from the spirit and scope of the technical solutions of the embodiments of the present invention, and are therefore intended to be encompassed within the scope of protection of the present invention. Therefore, the scope of protection of the present invention is to be defined by the scope of the appended claims.

**Claims**

1. A method for measuring a displacement of a chest of a test dummy, **characterized by** being applied to a device for measuring the displacement of the chest of the test dummy, wherein the measuring device consists of a first angle sensor, a second angle sensor, a third angle sensor, a universal joint, a first swing arm, and a second swing arm; the third angle sensor, the second angle sensor, the second swing arm, the first angle sensor, the first swing arm, and the universal joint are connected in sequence; a front end of the universal joint is connected to a rib of the chest of the test dummy; and the measuring method comprises:

   acquiring design parameters of the measuring device in a pre-established coordinate system, and initial angles of the first angle sensor, the second angle sensor, and the third angle sensor in the measuring device;
   setting, as a measurement point, a point at which a rotation axis center of the universal joint is connected to the rib of the chest of the test dummy, and determining, based on the design parameters and the initial angles of the first angle sensor, the second angle sensor, and the third angle sensor, initial coordinates of the measurement point when no impact is exerted on the chest of the test dummy;
   acquiring current angles of the first angle sensor, the second angle sensor, and the third angle sensor in the measuring device after an impact is exerted on the chest of the test dummy;
   determining, based on the current angles of the first angle sensor, the second angle sensor, and the third angle sensor, current coordinates of the measurement point when the impact is exerted on the chest of the test dummy; and
   obtaining a three-dimensional displacement of the compressed chest of the test dummy based on the initial coordinates of the measurement point and the current coordinates of the measurement point.

2. The measuring method according to claim 1, wherein the design parameters comprise a first distance, a second distance, a third distance, and a target distance; the first distance is a vertical distance from an axial center of the first angle sensor to the rotation axis center of the universal joint; the second distance is a vertical distance from the axial center of the first angle sensor to an axial center of the second angle sensor; the third distance is a vertical distance from the axial center of the second angle sensor to an axial center of the third angle sensor; the target distance is a vertical distance from the axial center of the second angle sensor to an X-axis of the coordinate system; and the step of determining, based on the design parameters and the initial angles of the first angle sensor, the second angle sensor, and the third angle sensor, initial coordinates of the measurement point when no impact is exerted on the chest of the test dummy comprises:

substituting the first distance, the second distance, and the initial angles of the first angle sensor, the second angle sensor, and the third angle sensor into a first preset formula to obtain an initial horizontal-axis coordinate;
substituting the first distance, the second distance, the target distance, the initial angle of the first angle sensor, and the initial angle of the third angle sensor into a second preset formula to obtain an initial longitudinal-axis coordinate, wherein the first angle sensor measures an angle between the first swing arm and the second swing arm, the second angle sensor measures an angle between a rotation axis of the second angle sensor and a Z-axis, and the third angle sensor measures an angle between the second swing arm and the X-axis;
substituting the first distance, the second distance, the third distance, and the initial angles of the first angle sensor, the second angle sensor, and the third angle sensor into a third preset formula to obtain an initial vertical-axis coordinate; and
determining a combination of the initial horizontal-axis coordinate, the initial longitudinal-axis coordinate, and the initial vertical-axis coordinate as the initial coordinates of the measurement point when no impact is exerted on the chest of the test dummy.

3. The measuring method according to claim 2, wherein the step of determining, based on the current angles of the first angle sensor, the second angle sensor, and the third angle sensor, current coordinates of the measurement point when an impact is exerted on the chest of the test dummy comprises:

substituting the first distance, the second distance, and the current angles of the first angle sensor, the second angle sensor, and the third angle sensor into a fourth preset formula to obtain a current horizontal-axis coordinate;
substituting the first distance, the second distance, the target distance, the current angle of the first angle sensor, and the current angle of the third angle sensor into a fifth preset formula to obtain a current longitudinal-axis coordinate;
substituting the first distance, the second distance, the third distance, and the current angles of the first angle sensor, the second angle sensor, and the third angle sensor into a sixth preset formula to obtain a current vertical-axis coordinate; and
determining a combination of the current horizontal-axis coordinate, the current longitudinal-axis coordinate, and the current vertical-axis coordinate as the current coordinates of the measurement point when the impact is exerted on the chest of the test dummy.

4. The measuring method according to claim 3, wherein the first preset formula is a formula in which a measurement time parameter in the fourth preset formula is zero; the second preset formula is a formula in which a measurement time parameter in the fifth preset formula is zero; and the third preset formula is a formula in which a measurement time parameter in the sixth preset formula is zero.

5. The measuring method according to claim 1, wherein the step of obtaining a three-dimensional displacement of the compressed chest of the test dummy based on the initial coordinates of the measurement point and the current coordinates of the measurement point comprises:

determining a difference between a current horizontal-axis coordinate in the current coordinates of the measurement point and an initial horizontal-axis coordinate in the initial coordinates of the measurement point as a current horizontal displacement;
determining a difference between a current longitudinal-axis coordinate in the current coordinates of the measurement point and an initial longitudinal-axis coordinate in the initial coordinates of the measurement point as a current longitudinal displacement;
determining a difference between a current vertical-axis coordinate in the current coordinates of the measurement point and an initial vertical-axis coordinate in the initial coordinates of the measurement point as a current vertical displacement; and

determining a combination of the current horizontal displacement, the current longitudinal displacement, and the current vertical displacement as the three-dimensional displacement of the compressed chest of the test dummy.

6. The measuring method according to claim 1, further comprising:

obtaining a three-dimensional displacement of a compressed upper-left rib of the chest of the test dummy by a measuring device with a universal joint connected to the upper-left rib of the test dummy;
obtaining a three-dimensional displacement of a compressed lower-left rib of the chest of the test dummy by a measuring device with a universal joint connected to the lower-left rib of the test dummy;
obtaining a three-dimensional displacement of a compressed upper-right rib of the chest of the test dummy by a measuring device with a universal joint connected to the upper-right rib of the test dummy;
obtaining a three-dimensional displacement of a compressed lower-right rib of the chest of the test dummy by a measuring device with a universal joint connected to the lower-right rib of the test dummy;
determining an average displacement of the compressed chest of the test dummy from the three-dimensional displacement of the compressed upper-left rib, the three-dimensional displacement of the compressed lower-left rib, the three-dimensional displacement of the compressed upper-right rib, and the three-dimensional displacement of the compressed lower-right rib of the chest of the test dummy;
determining whether the average displacement of the compressed chest of the test dummy is within a preset calibrated chest displacement range; and
if yes, determining that a biomimetic performance of the chest of the test dummy meets the standard.

7. An apparatus for measuring a displacement of a chest of a test dummy, **characterized by** being applied to a device for measuring the displacement of the chest of the test dummy, wherein the measuring device consists of a first angle sensor, a second angle sensor, a third angle sensor, a universal joint, a first swing arm, and a second swing arm; the third angle sensor, the second angle sensor, the second swing arm, the first angle sensor, the first swing arm, and the universal joint are connected in sequence; a front end of the universal joint is connected to a rib of the chest of the test dummy; and the measuring apparatus comprises:

a first acquisition module configured to acquire design parameters of the measuring device in a pre-established coordinate system, and initial angles of the first angle sensor, the second angle sensor, and the third angle sensor in the measuring device;
a first determination module configured to set, as a measurement point, a point at which a rotation axis center of the universal joint is connected to the rib of the chest of the test dummy, and determine, based on the design parameters and the initial angles of the first angle sensor, the second angle sensor, and the third angle sensor, initial coordinates of the measurement point when no impact is exerted on the chest of the test dummy;
a second acquisition module configured to acquire current angles of the first angle sensor, the second angle sensor, and the third angle sensor in the measuring device after an impact is exerted on the chest of the test dummy;
a second determination module configured to determine, based on the current angles of the first angle sensor, the second angle sensor, and the third angle sensor, current coordinates of the measurement point when the impact is exerted on the chest of the test dummy; and
a measurement module configured to obtain a three-dimensional displacement of the compressed chest of the test dummy based on the initial coordinates of the measurement point and the current coordinates of the measurement point.

8. The measuring apparatus according to claim 7, wherein the design parameters comprise a first distance, a second distance, a third distance, and a target distance; the first distance is a vertical distance from an axial center of the first angle sensor to the rotation axis center of the universal joint; the second distance is a vertical distance from the axial center of the first angle sensor to an axial center of the second angle sensor; the third distance is a vertical distance from the axial center of the second angle sensor to an axial center of the third angle sensor; the target distance is a vertical distance from the axial center of the second angle sensor to an X-axis of the coordinate system; when the first determination module is configured to determine, based on the design parameters and the initial angles of the first angle sensor, the second angle sensor, and the third angle sensor, initial coordinates of the measurement point when no impact is exerted on the chest of the test dummy, the first determination module is configured to:

substitute the first distance, the second distance, and the initial angles of the first angle sensor, the second angle

# EP 4 775 927 A1

sensor, and the third angle sensor into a first preset formula to obtain an initial horizontal-axis coordinate; substitute the first distance, the second distance, the target distance, the initial angle of the first angle sensor, and the initial angle of the third angle sensor into a second preset formula to obtain an initial longitudinal-axis coordinate, wherein the first angle sensor measures an angle between the first swing arm and the second swing arm, the second angle sensor measures an angle between a rotation axis of the second angle sensor and a Z-axis, and the third angle sensor measures an angle between the second swing arm and the X-axis; substitute the first distance, the second distance, the third distance, and the initial angles of the first angle sensor, the second angle sensor, and the third angle sensor into a third preset formula to obtain an initial vertical-axis coordinate; and

determine a combination of the initial horizontal-axis coordinate, the initial longitudinal-axis coordinate, and the initial vertical-axis coordinate as the initial coordinates of the measurement point when no impact is exerted on the chest of the test dummy.

9. An electronic device, **characterized by** comprising: a processor, a memory, and a bus, wherein the memory stores machine-readable instructions executable by the processor; when the electronic device is running, the processor communicates with the memory via the bus; and the machine-readable instructions are run by the processor to execute the steps of the method for measuring the displacement of the chest of the test dummy according to any one of claims 1 to 6.

10. A computer-readable storage medium, **characterized in that** a computer program is stored on the computer-readable storage medium, and the computer program is run by a processor to execute the steps of the method for measuring the displacement of the chest of the test dummy according to any one of claims 1 to 6.

Acquiring design parameters of the measuring device in a pre-established coordinate system, and initial angles of the first angle sensor, the second angle sensor, and the third angle sensor in the measuring device ⎯S101

Setting, as a measurement point, a point at which a rotation axis center of the universal joint is connected to the rib of the chest of the test dummy, and determining, based on the design parameters and the initial angles of the first angle sensor, the second angle sensor, and the third angle sensor, initial coordinates of the measurement point when no impact is exerted on the chest of the test dummy ⎯S102

Acquiring current angles of the first angle sensor, the second angle sensor, and the third angle sensor in the measuring device after an impact is exerted on the chest of the test dummy ⎯S103

Determining, based on the current angles of the first angle sensor, the second angle sensor, and the third angle sensor, current coordinates of the measurement point when an impact is exerted on the chest of the test dummy ⎯S104

Obtaining a three-dimensional displacement of compressed chest of the test dummy based on initial coordinates of the measurement point and current coordinates of the measurement point ⎯S105

FIG. 1

Substituting the first distance, the second distance, and the initial angles of the first angle sensor, the second angle sensor, and the third angle sensor into a first preset formula to obtain an initial horizontal-axis coordinate ⎯ S201

Substituting the first distance, the second distance, the target distance, the initial angle of the first angle sensor, and the initial angle of the third angle sensor into a second preset formula to obtain an initial longitudinal-axis coordinate ⎯ S202

Substituting the first distance, the second distance, the third distance, and the initial angles of the first angle sensor, the second angle sensor, and the third angle sensor into a third preset formula to obtain an initial vertical-axis coordinate ⎯ S203

Determining a combination of initial horizontal-axis coordinate, initial longitudinal-axis coordinate, and initial vertical-axis coordinate as the initial coordinates of the measurement point when no impact is exerted on the chest of the test dummy ⎯ S204

FIG. 2

FIG. 3

FIG. 4

FIG. 5

FIG. 6

FIG. 7

FIG. 8

810

Measuring Apparatus

First Acquisition Module — 811

First Determination Module — 812

Second Acquisition Module — 813

Second Determination Module — 814

Measurement Module — 815

Application Module — 816

FIG. 9

1000

Electronic Device

Processor — 1010

Memory — 1020

1030

FIG. 10

## INTERNATIONAL SEARCH REPORT

| International application No. |
| --- |
| **PCT/CN2023/131409** |

### A. CLASSIFICATION OF SUBJECT MATTER

G01B21/32(2006.01)i; G01B21/02(2006.01)i; G01B21/22(2006.01)i

According to International Patent Classification (IPC) or to both national classification and IPC

### B. FIELDS SEARCHED

Minimum documentation searched (classification system followed by classification symbols)

IPC: G01B, B25J

Documentation searched other than minimum documentation to the extent that such documents are included in the fields searched

Electronic data base consulted during the international search (name of data base and, where practicable, search terms used)

CNABS, CNTXT, DWPI, ENTXT, ENTXTC, VEN, WPABS, WPABSC, CNKI, ISI_Web of Sciene: 摆臂, 摆动, 摆角, 机械, 臂, 角度, 碰撞, 万向, 位移, 位姿, 坐标, swing, mechanical, arm, angle, crash, displace+, coordinate? , position, posture, universal, joint

### C. DOCUMENTS CONSIDERED TO BE RELEVANT

| Category* | Citation of document, with indication, where appropriate, of the relevant passages | Relevant to claim No. |
| --- | --- | --- |
| Y | CN 112284758 A (CATARC AUTOMOTIVE TEST CENTER (TIANJIN) CO., LTD. et al.) 29 January 2021 (2021-01-29) description, paragraphs 3-32, and figures 1-4 | 1-10 |
| Y | CN 204807069 U (BEIQI FOTON MOTOR CO., LTD.) 25 November 2015 (2015-11-25) description, paragraphs 5-43, and figures 1-4 | 1-10 |
| Y | CN 1766524 A (KOREA ELECTRIC POWER CORP.) 03 May 2006 (2006-05-03) description, page 4 line 22 to page 5 line 21, and figures 1-3 | 1, 7, 9-10 |
| Y | US 6519860 B1 (SANDIA CORP.) 18 February 2003 (2003-02-18) description, column 7 line 10 to column 9 line 2 | 1, 7, 9-10 |
| A | JP 5483381 B1 (KYOEI SURVEY & DESIGN CO., LTD. et al.) 07 May 2014 (2014-05-07) entire document | 1-10 |
| A | US 2008036737 A1 (HERNANDEZ-REBOLLAR JOSE L) 14 February 2008 (2008-02-14) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 June 2024** | **06 June 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/131409**

| Patent document cited in search report | | | Publication date (day/month/year) | Patent family member(s) | | | Publication date (day/month/year) |
|---|---|---|---|---|---|---|---|
| CN | 112284758 | A | 29 January 2021 | None | | | |
| CN | 204807069 | U | 25 November 2015 | None | | | |
| CN | 1766524 | A | 03 May 2006 | KR | 20060038525 | A | 04 May 2006 |
| | | | | US | 2006107542 | A1 | 25 May 2006 |
| | | | | US | 7275330 | B2 | 02 October 2007 |
| US | 6519860 | B1 | 18 February 2003 | None | | | |
| JP | 5483381 | B1 | 07 May 2014 | JP | 2015025763 | A | 05 February 2015 |
| US | 2008036737 | A1 | 14 February 2008 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023111526772